# EUROPEAN PATENT SPECIFICATION

(11) **EP 2 433 527 B1**
(45) Date of publication and mention of the grant of the patent: **03.04.2013**
(21) Application number: 10425315.8
(22) Date of filing: 28.09.2010
(51) Int. Cl.: A47J 31/44

(54) **Improved automatic milk frothing wand**
Verbesserter automatischer Milchschaumschläger
Baguette améliorée de moussage automatique du lait

(43) Date of publication of application: 28.03.2012
(73) Proprietor: Gruppo Cimbali S.p.A., 20082 Binasco (MI) (IT)
(72) Inventor: Quaratesi, Guido, 20082 Binasco (MI) (IT); Volonte', Claudio, 21047 Saronno (VA) (IT)
(74) Representative: Perani, Aurelio

(56) References cited:
- EP-A1- 0 140 841
- EP-A1- 2 080 458
- EP-A1- 2 229 850
- EP-B1- 1 501 398

## Description

The present invention relates to a wand for dispensing vapour for heating and/or frothing a quantity of milk by vapour being introduced into a container in which the quantity of milk is located, the wand being provided with a first end, in the region of which it receives the vapour, and a second end, through which the vapour is dispensed, the second end being able to be positioned inside and outside the container by means of angular movements of the wand about an articulation, to which the first end is connected, the articulation being mounted on a portion of a machine for preparing drinks, the wand further comprising a thermoelectrical sensor for detecting the temperature reached by the milk in the container, the sensor being provided with wiring in order to transmit the electrical signal relating to the detected temperature outside the wand.

Milk frothing wandss for coffee machines of the type described, for example, in EP 1 501 398 B1, are particularly popular for use in situations in which it is necessary to froth and heat large quantities of milk. Wandss with their ends for dispensing the vapour are immersed in containers or jugs which contain the milk to be frothed and heated and which are supported on the work plane of the machine.

The wandss which can have a heating capacity of up to one or two litres of milk, at the end thereof in the region of which they are connected to the vapour pipe, are connected to an articulated joint for various functional reasons, also including the reason that it makes it easy to insert and withdraw the vapour dispensing end into/from the jug with a pivoting movement or, more generally, with angular movements about the articulation. As described in EP 1 501 398 B1, there is incorporated in the wand a thermocouple which serves to detect the temperature of the milk which is being heated and/or frothed. According to a common construction practice, those thermocouples comprise electrical conductors, for example, one of copper and one of costantan, which are introduced into a stainless steel sheath which isolates the two conductors from contact with the milk and the vapour, and which are connected to each other in order to form the so-called "hot joint" in the region of the end which is intended to be immersed in the milk. The other end of the same conductors in accordance with the prior art and currently in use are connected to an electrical terminal block which is positioned on the coffee machine, from which there extends the electrical wiring which is intended to transmit the signal for the temperature detected by the thermocouple to the conventional control unit of the same machine.

As a result of the presence of the articulation, with which the wand is connected to the machine.

During each operation for raising and lowering the wand in order to introduce the end thereof into the jug and to remove it, the conductors which constitute the thermocouple are subjected to at least four flexion loads. Since, with respect to the conductors of a normal copper wire, the materials constituting the conductors of the thermocouples, particularly, for example, the costantan conductor of a copper/costantan thermocouple, are not very flexible owing to their nature, after a given number of operations there occurs the breakage of one of the conductors, making a troublesome maintenance operation necessary in order to replace the thermocouple.

An object of the present invention is to overcome the disadvantage set out above in relation to the prior art. This object and other objects which will be appreciated from the remainder of the description will be achieved by the device according to appended claim 1 which is incorporated herein by reference.

The features and advantages of the present invention will be appreciated from a preferred practical embodiment which is illustrated by way of non-limiting example in the appended drawings, in which:
- Figure 1 is a schematic perspective view of a wand according to the invention which is mechanically connected with an articulation to a portion of a coffee machine;
- Figure 2 is a perspective view, drawn to an enlarged scale, of the upper portion of the wand of Figure 1, in which the electrical wiring relating to the thermocouple can be seen.

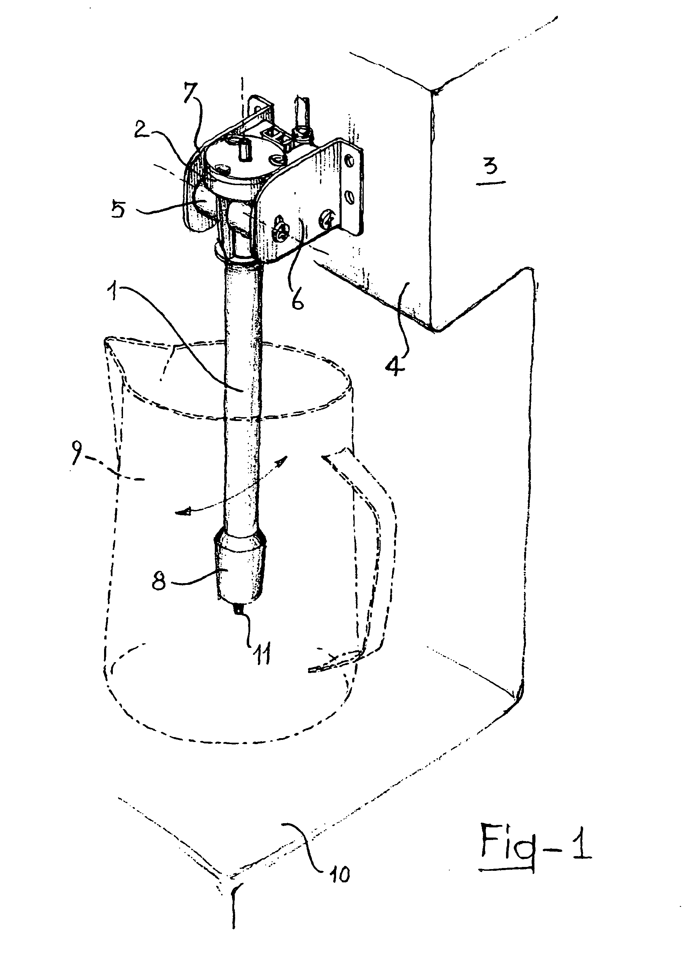

With reference to the above-mentioned Figures, and in particular Figure 1, the vapour wand of the invention is designated 1. It comprises a first end 2, to which there is conveyed the vapour in known manner from a boiler of a machine for preparing hot drinks, particularly coffee, which is not illustrated and is generally designated 3 schematically in Figure 1.

At the portion 4 of that coffee machine, the end 2 of the wand 1 is connected to an articulation 5 which is mounted between two consoles 6 and 7 which are in turn fixed to the portion 4.

The articulation 5 allows the wand 1 to be able to be moved angularly so as to be able to insert the second end 8 of the wand 1 into a container 9 of milk, which is then manually supported on the plane 10 of the machine.

The possibility of moving angularly about the articulation 5 also allows the withdrawal of the wand 1 out of the container 9 at the end of the heating operation and optional frothing of the milk.

The second end 8 of the wand 1 is the one for dispensing the vapour for heating and/or frothing the milk and is provided with a sensor 11 for detecting the temperature reached by the milk in the container 9.

According to the invention, the sensor 11 is preferably constituted by the hot joint of a thermocouple of the bimetal type, for example, copper and costantan, which is received in a protective sheath 12 which is positioned inside the wand 1.

Alternatively, though not illustrated in the drawings, the sensor 11 may be associated with the end 8 of the wand 1 at the outer side thereof and the protective sheath 12 may be positioned outside the wand 1 and be constructed, for example, from stainless steel.

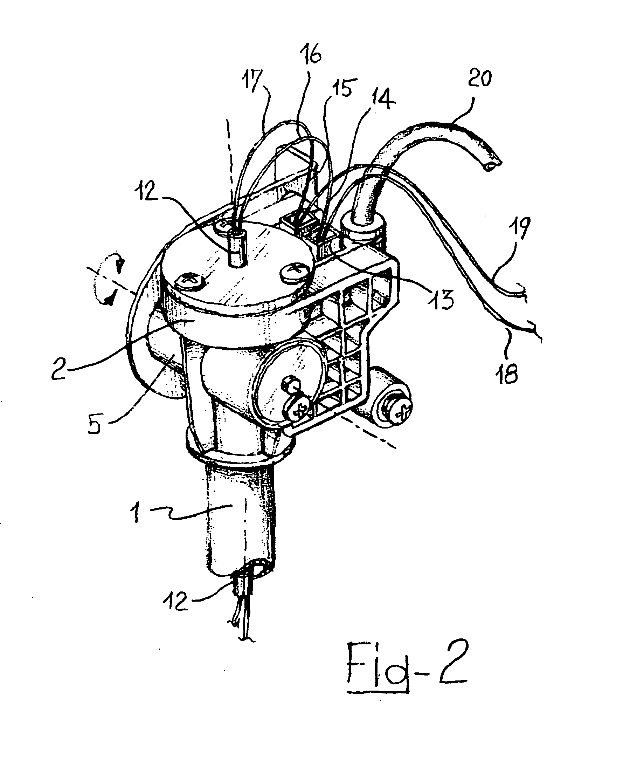

With reference to Figure 2, unlike in Figure 1, it is apparent that the end 2 of the wand 1 is provided with an electrical terminal block 13, to which there extend the terminals 14 and 15 of the metal elements 16 and 17 which constitute the thermocouple which, in the case described, are constituted by a copper wire and a costantan wire, the costantan wire particularly being very inflexible. The metal conductive elements 16 and 17 of the thermocouple and the terminals 14 and 15 thereof constitute a first portion of the wiring for carrying the electrical signal for the temperature detected from the hot joint 11 outside the wand 1 towards a control unit (not illustrated) of the machine 3.

The remaining second portion of the wiring comprises the conductors 18 and 19 which extend from the terminal block 13 and which can be conventional electrical wires having a plurality of filaments which are therefore provided with a high level of flexibility.

The vapour is supplied to the wand by means of a flexible pipe designated 20.

The structural solution described above may be implemented in a compact and functional manner by stamping the wand 1 from thermoplastic material which is sufficient to withstand the temperature and for compatibility with the foodstuffs.

Since the connection terminal block 13 is fixedly joined to the first end 2 of the wand 1, during the angular movements about the articulation 5, the conductors 16 and 17 which extend out of the sheath 12 of the thermocouple are not subjected to movements relative to the position of the terminal block 13. The occurrences of flexion owing to the movement are transmitted to the conductors 18 and 19 of the second portion of the wiring with a first advantage, firstly, of being able to use wires of the extra flexible type which can withstand a very large number of occurrences of flexion and, secondly, with the additional advantage, in the event of breakage, of readily being able to replace the wire of the second portion of wiring and not the thermocouple.

## Claims

1. A vapour dispensing wand for heating and/or frothing a quantity of milk by vapour being introduced into a container (9), in which the quantity of milk is located, the wand (1) being provided with a first end (2), in the region of which it receives the vapour, and a second end (8), through which the vapour is dispensed, the second end (8) being able to be positioned inside and outside the container (9) by means of angular movements of the wand (1) about an articulation (5), to which the first end is connected, the articulation (5) being mounted on a portion (4) of a machine (3) for preparing drinks, the wand (1) further comprising a thermoelectrical sensor (11) for detecting the temperature reached by the milk in the container (9), the sensor (11) being provided with wiring in order to transmit the electrical signal relating to the temperature detected outside the wand (1), **characterized in that** the first end (2) of the wand is provided with an electrical terminal block (13), and **in that** the wiring comprises a first portion (16, 17) which extends from the sensor (11) and which terminates at the electrical terminal block (13) and a second portion (18, 19) which extends from the terminal block (13).

2. A vapour dispensing wand according to claim 1, **characterized in that** the thermoelectrical sensor (11) is a thermocouple whose hot joint is associated with the second end (8) of the wand (1) which is immersed in the milk inside the container (9).

3. A vapour dispensing wand according to claim 2, wherein the thermocouple is of the bimetal copper/costantan type.

4. A dispensing wand according to claims 1 to 3, **characterized in that** the first wiring portion (16, 17) comprises the metal elements which constitute the thermocouple.

5. A vapour dispensing wand according to any one of claims 1 to 4, **characterized in that** the second wiring portion (18, 19) comprises multiple filament electrical conductors.

## Patentansprüche

1. Dampfspendestab zum Erwärmen und/oder Aufschäumen einer Milchmenge mittels Dampf, der in einen Behälter (9) eingeleitet wird, in dem sich die Milchmenge befindet, wobei der Stab (1) mit einem ersten Ende (2), in dessen Bereich er den Dampf aufnimmt, und einem zweiten Ende (8) versehen ist, durch welches der Dampf abgegeben wird, wobei das zweite Ende (8) innerhalb und außerhalb des Behälters (9) durch winkelige Bewegungen des Stabs (1) um ein Gelenk (5), mit dem das erste Ende verbunden ist, positioniert werden kann; wobei das Gelenk (5) an einem Abschnitt (4) einer Maschine (3) zum Herstellen von Getränken angebracht ist, wobei der Stab (1) ferner einen thermoelektrischen Sensor (11) zum Detektieren der Temperatur umfaßt, die von der Milch in dem Behälter (9) erreicht wird, wobei der Sensor (11) mit einer Verdrahtung versehen ist, um das die Temperatur, die außerhalb des Stabs (1) detektiert wird, betreffende elektrische Signal zu übertragen, **dadurch gekennzeichnet, daß** das erste Ende (2) des Stabs mit einem elektrischen Anschlußblock (13) versehen ist, und dadurch, daß die Verdrahtung einen ersten Abschnitt (16, 17), welcher sich von dem Sensor (11) erstreckt und welcher an dem elektrischen Anschlußblock (13) endet, und einen zweiten Abschnitt (18, 19) umfaßt, welcher sich von dem Anschlußblock (13) erstreckt.

2. Dampfspendestab nach Anspruch 1, **dadurch gekennzeichnet, daß** der thermoelektrische Sensor (11) ein Thermoelement ist, dessen heiße Verbindung mit dem zweiten Ende (8) des Stabs (1) verbunden ist, das in die Milch in dem Behälter (9) eingetaucht ist.

3. Dampfspendestab nach Anspruch 2, wobei das Thermoelement vom Bimetall-Kupfer/Konstantan-Typ ist.

4. Dampfspendestab nach den Ansprüchen 1 bis 3, **dadurch gekennzeichnet, daß** der erste Abschnitt (16, 17) der Verdrahtung die Metallelemente umfaßt, die das Thermoelement bilden.

5. Dampfspendestab nach einem der Ansprüche 1 bis 4, **dadurch gekennzeichnet, daß** der zweite Abschnitt (18, 19) der Verdrahtung elektrische Multifilamentleiter umfaßt.

## Revendications

1. Baguette de distribution de vapeur pour chauffer et/ou mousser une quantité de lait au moyen de vapeur qui est introduite dans un réservoir (9) dans lequel se trouve ladite quantité de lait, ladite baguette (1) étant pourvue d'une première extrémité (2) au niveau de laquelle elle reçoit la vapeur, et d'une deuxième extrémité (8) par laquelle la vapeur est distribuée, ladite deuxième extrémité (8) étant apte à être positionnée à l'intérieur et à l'extérieur dudit réservoir (9) au moyen de mouvements angulaires de la baguette (1) sur une articulation (5) à laquelle ladite première extrémité est reliée, ladite articulation (5) étant montée sur une portion (4) d'une machine (3) pour la préparation de boissons, ladite baguette (1) comprenant en outre un capteur thermoélectrique (11) destiné à détecter la température atteinte par le lait à l'intérieur du réservoir (9), ledit capteur (11) étant pourvu d'un câblage afin de transmettre le signal électrique relatif à la température détectée à l'extérieur de la baguette (1), **caractérisée par le fait que** la première extrémité (2) de ladite baguette est pourvue d'un bloc de raccordement électrique (13) et que ledit câblage comprend une première portion (16, 17) qui s'étend à partir du capteur (11) et qui se termine sur ledit bloc de raccordement électrique (13) ainsi qu'une deuxième portion (18, 19) qui s'étend à partir dudit bloc de raccordement (13).

2. Baguette de distribution de vapeur selon la revendication 1, **caractérisée par le fait que** le capteur thermoélectrique (11) est un thermocouple dont le joint chaud est relié à ladite deuxième extrémité (8) de la baguette (1), qui est immergée dans le lait présent à l'intérieur du réservoir (9).

3. Baguette de distribution de vapeur selon la revendication 2, dans laquelle le thermocouple est du type bimétallique cuivre/constantan.

4. Baguette de distribution de vapeur selon les revendications 1 à 3, **caractérisée par le fait que** ladite première portion de câblage (16, 17) comprend les éléments métalliques qui forment le thermocouple.

5. Baguette de distribution de vapeur selon l'une quelconque des revendications 1 à 4, **caractérisée par le fait que** ladite deuxième portion de câblage (18, 19) comprend des conducteurs électriques à fils multiples.
